# FASCICULE DE BREVET EUROPEEN

(11) **EP 1 878 279 B1**
(45) Date de publication et mention de la délivrance du brevet: **10.10.2018**
(21) Numéro de dépôt: 06743734.3
(22) Date de dépôt: 24.04.2006
(51) Int. Cl.: H04W 88/02, H04W 88/06

(54) **PROCÉDÉ DE RECONFIGURATION D'UNE UNITÉ DE TRAITEMENT D'INFORMATIONS D'UN TERMINAL**
VERFAHREN ZUR UMKONFIGURATION EINER INFORMATIONSVERARBEITUNGSEINHEIT EINES ENDGERÄTS
METHOD FOR THE RECONFIGURATION OF AN INFORMATION PROCESSING UNIT OF A TERMINAL

(30) Priorité: 03.05.2005 FR 0504500
(43) Date de publication de la demande: 16.01.2008
(73) Titulaire: Orange, 75015 Paris (FR)
(72) Inventeur: MISCOPEIN, Benoît, F-38000 Grenoble (FR); BATUT, Eric, F-32450 Saint Martin-Gimois (FR); SCHWOERER, Jean, F-38000 Grenoble (FR); SENN, Patrice, F-38000 Grenoble (FR)
(74) Mandataire: Cabinet Plasseraud
(86) Numéro de dépôt international: PCT/FR2006/000916
(87) Numéro de publication internationale: WO 2006/117451

(56) Documents cités:
- EP-A- 1 519 606
- US-A1- 2004 018 853
- US-A1- 2005 009 509
- US-A1- 2005 083 876
- MEHTA M ET AL: "Reconfigurable Terminals: An Overview of Architectural Solutions" IEEE COMMUNICATIONS MAGAZINE, IEEE SERVICE CENTER, PISCATAWAY, US, vol. 39, no. 8, août 2001 (2001-08), pages 82-89, XP002223682 ISSN: 0163-6804

## Description

La présente invention concerne la reconfiguration d'une unité de traitement d'informations d'un terminal.

Un terminal comprend généralement au moins une unité de traitement d'informations. Cette unité réalise un certain nombre d'opérations sur des informations qu'il reçoit depuis un système de communication, ou qu'il transmet à un tel système. D'emblée on notera que le mot "communication" est ici utilisé au sens large du terme. Il peut notamment s'agir d'une communication point à point ou d'une diffusion de point à multipoints. Parmi les opérations évoquées ci-dessus, on peut citer par exemple une modulation/démodulation, une conversion analogique/numérique ou numérique/analogique et un codage/décodage.

L'unité de traitement d'informations d'un terminal peut être amenée à effectuer une reconfiguration, de manière à modifier le traitement qu'elle applique aux informations entrantes ou sortantes.

Une telle reconfiguration peut être nécessaire notamment pour changer de mode de communication. A titre d'exemple, dans le domaine des radiocommunications, un terminal bi-mode peut être capable de communiquer avec des équipements correspondants d'un système de communication selon une technologie GSM ("Global System for Mobile communication") d'une part et une technologie UMTS ("Universal Mobile Telecommunications System") d'autre part. Cela peut notamment se produire lorsque la couverture radio du système de communication n'est pas uniforme et que des îlots de couverture UMTS sont dispersés dans un ensemble couvert en GSM.

Lorsque le terminal se déplace de l'ensemble couvert en GSM vers un îlot de couverture UMTS, son unité de traitement d'informations peut effectuer une phase de reconfiguration afin de passer d'un traitement des informations échangées avec le système de communication conforme à la technologie GSM à un traitement conforme à la technologie UMTS.

Un autre exemple pourrait être un terminal radio apte à communiquer sélectivement selon un mécanisme duplex à répartition par fréquence (FDD, "Frequency Division Duplex") ou un mécanisme duplex à répartition temporelle (TDD, "Time Division Duplex").

Un autre exemple encore peut concerner un changement de codage de la part de l'unité de traitement d'informations d'un terminal, sans pour autant changer de standard de communication.

Au cours d'une phase de reconfiguration, le traitement des informations reçues par le terminal peut être dégradé voire interrompu. Cet état a un effet négatif sur la qualité de service. En particulier, lorsque les informations sont reçues par le terminal dans le cadre d'une communication, cette dernière est susceptible de subir une dégradation importante pouvant aller jusqu'à la coupure. Un autre exemple se trouve dans le document US2004/018853.

La présente invention vise à permettre une amélioration de la qualité de service en cas de reconfiguration au sein d'un terminal.

L'invention propose ainsi un procédé de reconfiguration d'une unité de traitement d'informations d'un terminal, ledit terminal étant agencé pour recevoir des informations depuis un système de communication. Le procédé comprend les étapes suivantes :
- démarrer une phase de reconfiguration de l'unité de traitement d'informations ; et
- émettre, depuis le terminal vers le système de communication, une information signalant le démarrage de la phase de reconfiguration de l'unité de traitement d'informations.

L'émission, vers le système de communication, de l'information signalant le démarrage de la phase de reconfiguration de l'unité de traitement d'informations, permet de rendre ce système conscient du démarrage de la reconfiguration. Le système de communication pourra alors éventuellement prendre en compte cette information pour adapter son fonctionnement en conséquence. On donne ainsi les moyens au système d'agir pour maintenir la qualité de service, malgré l'existence de la reconfiguration.

De façon avantageuse, le terminal peut en outre signaler un événement consécutif à la fin de la phase de reconfiguration de son unité de traitement d'informations. Cette information peut à nouveau être exploitée par le système de communication pour adapter son mode de fonctionnement. Par exemple, un traitement nominal des informations transmises par ce système peut être repris sur notification dudit événement.

Au cours de la phase de reconfiguration, on peut avantageusement stocker, dans une mémoire tampon du terminal, des informations reçues depuis le système de communication. Cela permet de conserver des informations qui pourront être traitées par l'unité de traitement d'informations du terminal, à l'issue de la phase de reconfiguration. Les informations transmises par le système pendant la reconfiguration pourraient, sinon, être perdues.

De façon avantageuse, un traitement dégradé est mis en oeuvre par l'unité de traitement d'informations après la phase de reconfiguration, de façon à vider la mémoire tampon du terminal à un rythme accéléré. On améliore ainsi la qualité de service en limitant le retard dans le traitement des informations reçues.

L'invention propose en outre un procédé de communication entre un terminal comprenant une unité de traitement d'informations et un système de communication apte à transmettre des informations vers ledit terminal. Le procédé comprend l'étape suivante, lorsque le système de communication transmet des informations vers ledit terminal dans le cadre d'une communication :
- émettre, depuis le terminal vers le système de communication, une information signalant le démarrage d'une phase de reconfiguration de l'unité de traitement d'informations du terminal.

Le fait de signaler le démarrage d'une phase de reconfiguration permet au système de communication de disposer d'une information pertinente qu'il pourra éventuellement exploiter par la suite. En particulier, ce système peut adapter son mode de transmission d'informations à destination du terminal, de façon à maintenir une qualité de service acceptable pour la communication en cours.

A titre d'exemple, le système de communication peut, une fois averti du démarrage de la reconfiguration, introduire un retard dans la transmission de certaines informations destinées au terminal, protéger de façon accrue certaines informations destinées au terminal contre les erreurs ou encore compresser de façon accrue certaines informations destinées au terminal.

L'invention propose aussi un terminal comprenant une unité de traitement d'informations et agencé pour recevoir des informations depuis un système de communication. Le terminal comprend :
- des moyens pour démarrer une phase de reconfiguration de l'unité de traitement d'informations ; et
- des moyens pour informer le système de communication du démarrage de la phase de reconfiguration de l'unité de traitement d'informations.

L'invention propose aussi un système de communication agencé pour transmettre des informations vers au moins un terminal comprenant une unité de traitement d'informations. Le système de communication comprend :
- des moyens pour recevoir du terminal une information signalant le démarrage d'une phase de reconfiguration de l'unité de traitement d'informations du terminal.

L'invention propose aussi un produit programme d'ordinateur comprenant des instructions aptes à mettre en oeuvre une reconfiguration d'une unité de traitement d'informations d'un terminal agencé pour recevoir des informations depuis un système de communication, selon les étapes suivantes, lorsque ledit programme est chargé et exécuté par des moyens informatiques du terminal :
- démarrer une phase de reconfiguration de l'unité de traitement d'informations ; et
- émettre, depuis le terminal vers le système de communication, une information signalant le démarrage de la phase de reconfiguration de l'unité de traitement d'informations.

L'invention propose enfin un produit programme d'ordinateur comprenant des instructions aptes à mettre en oeuvre l'étape suivante, lorsque ledit programme d'ordinateur est chargé et exécuté par des moyens informatiques d'un système de communication agencé pour transmettre des informations vers au moins un terminal comprenant une unité de traitement d'informations :
- recevoir du terminal une information signalant le démarrage d'une phase de reconfiguration de l'unité de traitement d'informations.

D'autres particularités et avantages de la présente invention apparaîtront dans la description ci-après d'exemples de réalisation non limitatifs, en référence aux dessins annexés, dans lesquels :
- la figure 1 est un schéma d'architecture fonctionnelle d'un système dans lequel l'invention peut être mise en oeuvre ;
- la figure 2 est un schéma montrant des échanges d'informations au sein du système de la figure 1 selon un mode de réalisation de l'invention ;
- la figure 3 est un schéma montrant l'état d'une mémoire tampon d'un terminal, en correspondance avec l'échange d'informations de la figure 2.

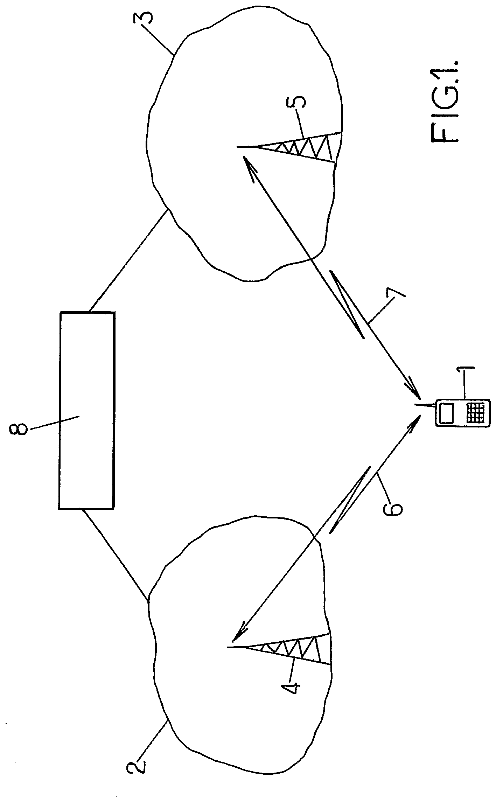

La figure 1 montre un système de communication (ou de diffusion) comprenant deux sous-systèmes 2 et 3, aptes à communiquer chacun selon un mode de communication. Dans l'exemple décrit ci-après, le sous-système 2 est un réseau GSM, tandis que le sous-système 3 est un réseau UMTS. Une interconnexion peut être assurée entre ces deux sous-systèmes, par exemple par l'intermédiaire d'un gestionnaire de supervision 8, de façon à assurer une continuité de service entre eux.

On notera que les sous-systèmes 2 et 3 pourraient utiliser tout autre standard de communication. Par exemple, ils pourraient tous deux mettre en oeuvre la technologie GSM ou UMTS, en mode FDD en ce qui concerne le sous-système 2 et en mode TDD en ce qui concerne le sous-système 3. Ils pourraient également mettre en oeuvre un même standard de communication, mais différer seulement par le codage mis en oeuvre.

On notera en outre que les deux sous-systèmes 2 et 3 ont été représentés de façon séparée sur la figure 1. Cependant, il est également possible que le système de communication soit composé d'un seul ensemble d'équipements aptes à mettre en oeuvre plusieurs modes de communication sélectivement.

Un terminal 1 est capable de communiquer sélectivement selon chacun des modes de communication mis en oeuvre par le système de communication. Dans l'exemple décrit en référence à la figure 1, le terminal 1 est donc un terminal radio bi-mode apte à communiquer selon la technologie GSM et selon la technologie UMTS.

Le terminal 1 peut ainsi recevoir des informations depuis le réseau 2 selon le protocole GSM, par l'intermédiaire de la station de base 4. Il peut par ailleurs recevoir des informations depuis le réseau 3 selon le protocole UMTS, par l'intermédiaire de la station de base 5.

On notera que, lorsque le système de communication avec lequel le terminal 1 échange des informations n'est pas divisible en sous-systèmes distincts, une même station de base peut permettre la communication avec le terminal 1 selon l'une ou l'autre des technologies GSM et UMTS.

Dans l'exemple décrit ci-après, le terminal 1 comporte une unique unité de traitement d'informations reconfigurable pour traiter les informations échangées avec l'un ou l'autre des réseaux 2 et 3.

Ainsi, si le terminal 1 est initialement en communication en mode GSM avec le réseau 2 et si la communication doit être poursuivie en mode UMTS, à l'initiative du terminal ou du système de communication, le terminal 1 reconfigure alors son unité de traitement d'informations afin qu'elle puisse traiter des informations en mode UMTS. Le réseau 2 indique au réseau 3, par exemple par l'intermédiaire du gestionnaire de supervision 8, qu'il doit poursuivre la communication. Cette dernière est alors reprise entre le terminal 1 et le réseau 3, selon la technologie UMTS, après reconfiguration de l'unité de traitement d'informations du terminal 1.

Pendant sa reconfiguration, l'unité de traitement d'informations du terminal 1 n'est pas en mesure de traiter les informations encore reçues du réseau 2 et les informations déjà reçues du réseau 3. A cet effet, le terminal 1 peut avantageusement stocker dans une mémoire tampon, les informations reçues pendant cette période, afin de les traiter une fois son unité de traitement d'informations reconfigurée et donc à nouveau opérationnelle.

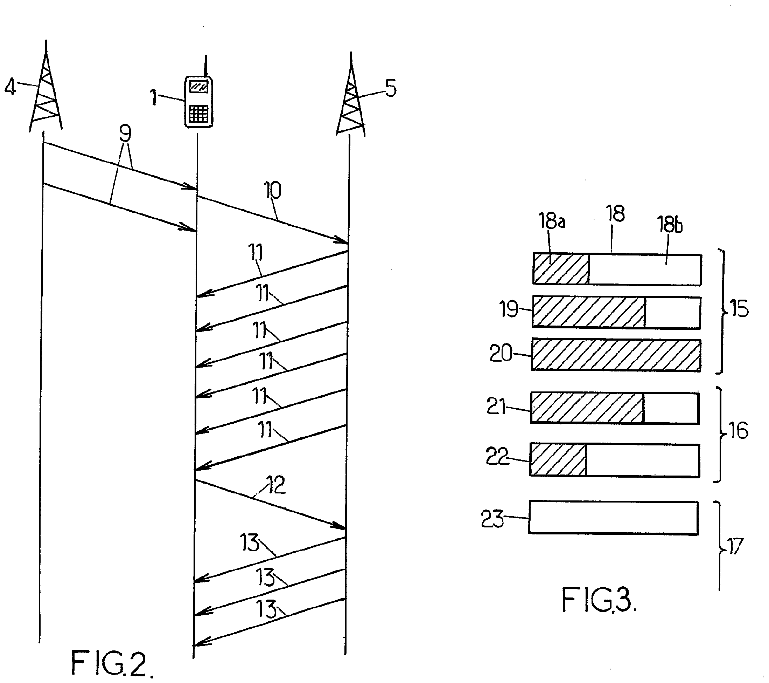

Ce mode de fonctionnement est illustré en partie supérieure des figures 2 et 3. Dans un premier temps, la station de base 4 du réseau 2 transmet des trames d'informations 9 au terminal 1 selon le protocole GSM, dans le cadre d'une communication. Puis le terminal 1 démarre une phase de reconfiguration de son unité de traitement d'informations, pour passer du mode GSM au mode UMTS. Dans le même temps, la station de base 5 du réseau 3 commence à transmettre des trames d'informations 11 relatives à la communication en cours, selon la technologie UMTS. Le terminal 1 remplit alors sa mémoire tampon, s'il en possède une, avec les trames reçues au cours de la phase de reconfiguration.

Cette mémoire tampon peut être dédiée à cet usage ou bien être la même que celle utilisée pour placer temporairement l'ensemble des informations reçues, en attente de traitement par l'unité de traitement d'informations du terminal 1. Afin de simplifier l'exposé, on se place par la suite dans le cas d'une mémoire tampon dédiée pour recevoir temporairement les informations reçues pendant la phase de reconfiguration.

Ainsi, les premières trames 11 reçues de la station de base 5 sont placées dans la zone 18a de la mémoire tampon 18, laissant ainsi une zone vide 18b dans cette mémoire. Au fur et à mesure que les trames 11 sont reçues au terminal 1, celui-ci les place dans sa mémoire tampon (référence 19 sur la figure 3), jusqu'à ce que celle-ci soit entièrement remplie (référence 20 sur la figure 3) ou bien jusqu'à ce que la reconfiguration au sein du terminal 1 soit achevée. De préférence, on dimensionnera la mémoire tampon du terminal 1, de façon à ce qu'elle puisse contenir l'ensemble des informations reçues pendant une phase de reconfiguration.

La phase de reconfiguration (référence 15 sur la figure 3) s'accompagne donc, le cas échéant, du remplissage de la mémoire tampon du terminal par des informations reçues au terminal 1 et en attente de traitement. Ce mode de fonctionnement avantageux évite la perte des trames reçues par le terminal pendant la phase de reconfiguration.

Selon l'invention, on informe le réseau 3 du démarrage de la phase de reconfiguration au sein du terminal 1. Le terminal 1 peut ainsi signaler au réseau 3, par l'intermédiaire de la station de base 5, que la phase de reconfiguration a démarré (message 10 sur la figure 2). Cette information est par exemple transmise sur un canal physique dédié ou un canal de contrôle commun.

Dans ce cas, le démarrage de la phase de reconfiguration peut être quasi-simultané avec l'émission du message 10 ou bien déclencher l'émission de ce message 10.

En variante, le message 10 peut être émis par le terminal 1 avant le démarrage de la phase de reconfiguration. Dans ce cas, il contient avantageusement une indication du moment où la reconfiguration démarrera. Le réseau 3 peut ainsi anticiper les éventuelles mesures à prendre pour tenir compte de la phase de reconfiguration à venir.

Sur réception de ce message, le réseau 3 peut adapter son mode de fonctionnement de façon à tenir compte du fait que la phase de reconfiguration a ou va démarrer. Le mode de fonctionnement mis en oeuvre vise par exemple à limiter l'occupation de la mémoire tampon du terminal 1, afin que celui-ci puisse traiter rapidement les informations stockées temporairement dans cette mémoire. Lorsque le terminal 1 ne dispose pas de mémoire tampon, le réseau peut néanmoins réagir à l'information de démarrage de la phase de reconfiguration, par exemple en interrompant provisoirement ses transmissions à l'attention du terminal 1.

On note cependant que le réseau 3 est libre d'interpréter l'information de démarrage de la phase de reconfiguration au sein du terminal 1, comme il le souhaite. Il peut même ignorer cette information et continuer à fonctionner selon le même mode. Ainsi, l'émission du message 10 par le terminal 1 permet avant tout la mise à disposition au réseau 3 d'une information pertinente que celui-ci peut exploiter à sa guise, dans le but de maintenir une qualité de service satisfaisante pour la communication en cours.

Dans un premier exemple de réalisation, le réseau 3 peut réagir à la réception de l'information de démarrage de la phase de reconfiguration en différant l'envoi de trames depuis la station de base 5 à destination du terminal 1. Les trames 11 peuvent ainsi être émises à l'issue d'un retard prédéterminé, courant par exemple à compter de la réception du message 10 par le réseau 3, de façon à éviter une perte d'informations ou bien, le cas échéant, l'encombrement de la mémoire tampon du terminal 1. Dans le dernier cas, on évite ainsi une éventuelle saturation de la mémoire tampon qui résulterait en une perte d'informations transmises par la station de base 5.

On notera que le retard introduit dans la transmission de certaines trames envoyées par la station de base 5 n'est envisageable que dans le cas où le mode de communication mis en oeuvre par le réseau 3 le supporte et où un tel retard est acceptable pour la communication en cours (transmission de données sans contrainte de temps réel par exemple).

Dans un deuxième exemple de réalisation, le réseau 3 peut réagir à la réception de l'information de démarrage de la phase de reconfiguration en compressant les informations à transmettre par la station de base 5 avec un niveau de compression supérieur aux autres informations. Ainsi, on limite la quantité de trames envoyées depuis la station de base 5 à destination du terminal 1 et on évite, le cas échéant, de saturer la mémoire tampon du terminal et donc de perdre des informations. Bien sûr, le terminal 1 doit disposer des algorithmes de décompression correspondants pour retrouver les informations transmises par la station de base 5. Tout algorithme de compression/décompression connu peut être utilisé à cet effet.

Dans un autre mode de réalisation avantageux, on prévoit en outre que le traitement effectué par l'unité de traitement d'informations du terminal 1 est dégradé après le démarrage de la phase de reconfiguration, de façon à vider la mémoire tampon à un rythme accéléré. En d'autres termes, certains des algorithmes mis en oeuvre par l'unité de traitement d'informations du terminal 1 sont moins performants mais plus rapides que dans le cas nominal, après le démarrage de la phase de reconfiguration (phase 16 sur la figure 3).

Dans ce cas de figure particulièrement, il peut être avantageux que le réseau 3 réagisse à la réception de l'information de démarrage de la phase de reconfiguration en protégeant contre les erreurs les informations transmises par la station de base 5 avec un niveau de protection supérieur aux autres informations. Par exemple, les trames 11 transmises par la station de base 5 peuvent comprendre plus de redondance d'information que les trames transmises en mode nominal. De cette façon, même si le terminal 1 met en oeuvre des algorithmes de traitement dégradés, il est capable de retrouver, sans erreurs excessives, les informations transmises.

On notera en outre qu'une limitation- des trames d'informations transmises par la station de base 5 à destination du terminal 1, lorsque le réseau 3 a été informé du démarrage de la phase de reconfiguration, est également avantageuse lorsque l'unité de traitement d'informations du terminal 1 met en oeuvre des algorithmes de traitement dégradés. En effet, comme cela a été exposé plus haut, un retard de transmission ou une compression accrue des informations par le réseau 3 limite l'occupation de la mémoire tampon du terminal 1 et donc la quantité d'informations qui devront être traitées avec les algorithmes dégradés. On améliore ainsi la qualité de traitement au niveau du terminal, en privilégiant le traitement nominal des informations, et on maintient en conséquence la qualité de la communication.

Bien sûr, d'autres opérations peuvent être mises en oeuvre par le réseau 3 sur réception de l'information de démarrage de la phase de reconfiguration au sein du terminal 1, de façon à tenir compte de cette situation. A titre d'exemple, une combinaison des exemples de réalisation décrits plus haut peut être envisagée. Ainsi, les informations transmises par la station de base 5 peuvent être à la fois compressées et redondantes. De cette façon, la compression limite l'augmentation des informations à transmettre du fait de la redondance. On peut ainsi transmettre la même quantité d'informations que dans le mode nominal tout en préservant la qualité de la communication éventuellement altérée par la mise en oeuvre momentanée de traitements dégradés par le terminal 1.

Comme cela a été décrit plus haut, le réseau 3 peut réagir à la réception de l'information selon laquelle une phase de reconfiguration de communication a démarré au terminal 1, en traitant certaines informations, avant leur transmission au terminal 1, d'une façon particulière (retard de transmission, compression accrue, protection accrue contre les erreurs, etc.).

Ce traitement particulier peut s'appliquer dès que le réseau 3 est informé du démarrage de la phase de reconfiguration (message 10 sur la figure 2). Il peut s'appliquer à un nombre prédéterminé de trames 11. Par exemple, toutes les trames 11 transmises au terminal 1 entre la réception du message 10, faisant partir un compteur temporel, et l'expiration de ce compteur, peuvent être traitées de façon particulière. Le compteur sera alors réglé avantageusement pour couvrir la durée moyenne d'une phase de reconfiguration.

En variante, le message 10 peut contenir une indication permettant au réseau 3 de déduire le temps nécessaire à la reconfiguration de l'unité de traitement d'informations du terminal 1. Cette indication peut être de nature temporelle, par exemple une durée de reconfiguration. Elle peut aussi désigner un type de la reconfiguration (e.g. changement de standard de communication, changement de codage/décodage, etc.).

Dans un autre mode de réalisation, le traitement particulier des informations transmises par la station de base 5 à destination du terminal 1 peut s'appliquer jusqu'à la signification au réseau 3 d'un événement consécutif au démarrage de la phase de reconfiguration.

L'événement considéré peut par exemple être la fin de la phase de reconfiguration, c'est-à-dire le moment où l'unité de traitement d'informations du terminal est configurée pour communiquer avec le réseau 3 selon la technologie UMTS. A la fin de la phase de reconfiguration en effet, l'unité de traitement d'informations du terminal 1 est à nouveau capable de traiter les informations reçues ou, le cas échéant, stockées dans sa mémoire tampon si bien que cette mémoire tampon peut commencer à se vider (phase 16 et états 21 et 22 sur la figure 3).

En variante, lorsque le terminal 1 dispose d'une mémoire tampon, l'événement considéré peut désigner le moment où le taux d'occupation de cette mémoire tampon passe en dessous d'un seuil prédéterminé. Lorsque la mémoire tampon en question est dédiée à la réception temporaire des informations reçues à la suite du démarrage de la phase de reconfiguration, le seuil peut par exemple être réglé à zéro. Dans ce cas, le terminal 1 envoie un message 12 à la station de base 5 pour lui indiquer que sa mémoire tampon est vide et que le traitement nominal des informations transmises par la station de base 5 peut être repris. Le réseau 3 ne reprend ainsi un fonctionnement nominal que lorsqu'il est averti que le terminal 1 peut à nouveau traiter les informations reçues de façon satisfaisante.

De même, si le terminal 1 met en oeuvre un traitement dégradé des informations reçues après le démarrage de la phase de reconfiguration, il peut reprendre son fonctionnement nominal à l'apparition de l'événement considéré. On peut ainsi assurer un fonctionnement cohérent du terminal 1 et du réseau 3.

Par la suite, les informations transmises dans les trames 13 peuvent être traitées par la station de base 5 et le réseau 3 de façon nominale, c'est-à-dire avec les algorithmes de compression et de protection habituels et sans retard (phase 17 sur la figure 3). La mémoire tampon du terminal 1 reste vide ou peu occupée (état 23 sur la figure 3).

A la lumière de ce qui précède, on comprend que l'invention permet d'optimiser les ressources radio en tenant compte du temps nécessaire à la phase de reconfiguration au sein du terminal.

On notera que dans l'exemple décrit plus haut, le terminal 1 possédait une seule unité de traitement d'informations. Cependant, l'invention est également applicable à un terminal comprenant plusieurs unités de traitement d'informations indépendantes capables de traiter chacune des informations selon des traitements respectifs. Dans ce cas, la phase de reconfiguration doit être interprétée comme un basculement d'une unité de traitement d'informations à l'autre.

Un tel basculement n'est en effet pas instantané. Pendant la période de basculement, le traitement des informations reçues par le terminal est dégradé, voire interrompu, comme dans le cas d'une reconfiguration d'une unique unité de traitement d'informations. Les opérations décrites ci-dessus restent donc applicables dans ce cas et permettent d'obtenir le même type d'amélioration.

Les opérations décrites plus haut peuvent en outre être mises en oeuvre à l'aide de programmes d'ordinateur adéquats. Par exemple, un programme chargé et exécuté sur le terminal peut contenir des instructions permettant d'effectuer une procédure de reconfiguration, c'est-à-dire de démarrer une phase de reconfiguration et d'en informer le réseau. Un autre programme chargé et exécuté par des moyens informatiques du réseau peut contenir des instructions permettant de recevoir l'information de démarrage d'une phase de reconfiguration au sein du terminal, et éventuellement d'adapter en conséquence le traitement des informations transmises au terminal.

## Revendications

1. Procédé de reconfiguration d'une unité de traitement d'informations d'un terminal radio (1) par un changement de standard de communication ou par un changement de codage/décodage, ledit terminal étant agencé pour recevoir des informations depuis un système de communication ou de diffusion (2,3), le procédé comprenant les étapes suivantes :
- démarrer une phase de reconfiguration de l'unité de traitement d'informations ; et
- émettre, depuis le terminal vers le système de communication ou de diffusion, une information signalant le démarrage de la phase de reconfiguration de l'unité de traitement d'informations,
dans lequel la reconfiguration de l'unité de traitement d'informations du terminal (1) concerne un changement de mode de communication d'un premier mode de communication vers un deuxième mode de communication,
dans lequel, suite à l'émission de l'information signalant le démarrage de la phase de reconfiguration de ladite unité de traitement d'informations, le procédé comporte en outre une réception d'informations depuis le système de communication ou de diffusion (2,3), certaines au moins desdites informations ayant été traitées, avant transmission, pour tenir compte du démarrage de la phase de reconfiguration de ladite unité de traitement d'informations.

2. Procédé de reconfiguration selon la revendication 1, comprenant en outre l'émission, depuis le terminal (1) vers le système de communication ou de diffusion (2,3), d'une information signalant un événement consécutif à la fin de la phase de reconfiguration de l'unité de traitement d'informations.

3. Procédé de reconfiguration selon la revendication 1 ou 2, comprenant en outre le stockage, dans une mémoire tampon (18-23) du terminal (1), des informations reçues depuis le système de communication ou de diffusion (2,3), au cours de la phase de reconfiguration de l'unité de traitement d'informations.

4. Procédé de reconfiguration selon les revendications 2 et 3, dans lequel l'événement consécutif à la fin de la phase de reconfiguration de l'unité de traitement d'informations comprend le passage en dessous d'un seuil prédéterminé d'un taux d'occupation de la mémoire tampon (18-23) du terminal (1).

5. Procédé de reconfiguration selon la revendication 3 ou 4, dans lequel un traitement dégradé est mis en oeuvre par l'unité de traitement d'informations après la phase de reconfiguration de ladite unité de traitement d'informations, de façon à vider la mémoire tampon (18-23) du terminal (1) à un rythme accéléré.

6. Procédé de communication entre un terminal radio (1) comprenant une unité de traitement d'informations et un système de communication ou de diffusion (2,3) apte à transmettre des informations vers ledit terminal, le procédé comprenant l'étape suivante, lorsque le système de communication ou de diffusion transmet des informations vers ledit terminal dans le cadre d'une communication :
- recevoir, depuis le terminal, une information signalant le démarrage d'une phase de reconfiguration de l'unité de traitement d'informations du terminal ;
dans lequel la reconfiguration de l'unité de traitement d'informations du terminal (1) concerne un changement de mode de communication d'un premier mode de communication vers un deuxième mode de communication,
dans lequel, suite à la réception de l'information signalant le démarrage de la phase de reconfiguration de ladite unité de traitement d'informations, le procédé comporte en outre une transmission d'informations depuis le système de communication ou de diffusion (2,3) vers le terminal (1), certaines au moins desdites informations étant traitées, avant transmission, pour tenir compte du démarrage de la phase de reconfiguration de ladite unité de traitement d'informations.

7. Procédé de communication selon la revendication 1, comprenant en outre l'émission, depuis le terminal (1) vers le système de communication ou de diffusion (2,3), d'une information signalant un événement consécutif à la fin de la phase de reconfiguration de l'unité de traitement d'informations.

8. Procédé de communication selon les revendications 1 et 7, dans lequel les informations traitées, avant transmission, pour tenir compte du démarrage d'une phase de reconfiguration de ladite unité de traitement d'informations, comprennent certaines au moins des informations transmises depuis le système de communication ou de diffusion vers le terminal entre les réceptions, par le système de communication ou de diffusion, de l'information signalant le démarrage d'une phase de reconfiguration de l'unité de traitement d'informations et de l'information signalant un événement consécutif à la fin de la phase de reconfiguration de l'unité de traitement d'informations.

9. Procédé de communication selon l'une quelconque des revendications 1, 7 à 8, dans lequel le traitement, avant transmission, de certaines au moins des informations transmises depuis le système de communication ou de diffusion (2,3) vers le terminal (1), pour tenir compte du démarrage d'une phase de reconfiguration de ladite unité de traitement d'informations, comprend l'un au moins parmi : l'introduction d'un retard de transmission, une protection accrue contre les erreurs et une compression accrue.

10. Terminal radio (1) comprenant une unité de traitement d'informations et agencé pour recevoir des informations depuis un système de communication ou de diffusion (2,3), le terminal comprenant :
- des moyens pour démarrer une phase de reconfiguration de l'unité de traitement d'informations par un changement de standard de communication ou par un changement de codage/décodage ; et
- des moyens pour informer le système de communication ou de diffusion du démarrage de la phase de reconfiguration de l'unité de traitement d'informations.
dans lequel la reconfiguration de l'unité de traitement d'informations du terminal (1) concerne un changement de mode de communication d'un premier mode de communication vers un deuxième mode de communication,
dans lequel, le terminal comprend en outre des moyens pour, suite à l'émission de l'information signalant le démarrage de la phase de reconfiguration de ladite unité de traitement d'informations, recevoir des informations depuis le système de communication ou de diffusion (2,3), certaines au moins desdites informations ayant été traitées, avant transmission, pour tenir compte du démarrage de la phase de reconfiguration de ladite unité de traitement d'informations.

11. Système de communication ou de diffusion (2,3) agencé pour transmettre des informations vers au moins un terminal radio (1) comprenant une unité de traitement d'informations, le système de communication ou de diffusion comprenant :
- des moyens pour recevoir du terminal une information signalant le démarrage d'une phase de reconfiguration de l'unité de traitement d'informations du terminal par un changement de standard de communication ou par un changement de codage/décodage.
dans lequel la reconfiguration de l'unité de traitement d'informations du terminal (1) concerne un changement de mode de communication d'un premier mode de communication vers un deuxième mode de communication,
dans lequel, le système de communication ou de diffusion (2,3) comprend en outre des moyens pour, suite à la réception de l'information signalant le démarrage de la phase de reconfiguration de ladite unité de traitement d'informations, transmettre des informations vers le terminal (1), certaines au moins desdites informations étant traitées, avant transmission, pour tenir compte du démarrage de la phase de reconfiguration de ladite unité de traitement d'informations.

12. Système de communication ou de diffusion (2,3) selon la revendication 11, comprenant en outre des moyens pour traiter, avant transmission, certaines au moins des informations transmises vers le terminal (1), suite à la réception de l'information signalant le démarrage de la phase de reconfiguration de ladite unité de traitement, pour tenir compte dudit démarrage.

13. Produit programme d'ordinateur comprenant des instructions aptes à mettre en oeuvre une reconfiguration d'une unité de traitement d'informations d'un terminal radio
(1) agencé pour recevoir des informations depuis un système de communication ou de diffusion (2,3), selon les étapes suivantes, lorsque ledit programme est chargé et exécuté par des moyens informatiques du terminal :
- démarrer une phase de reconfiguration de l'unité de traitement d'informations par un changement de standard de communication ou par un changement de codage/décodage; et
- émettre, depuis le terminal vers le système de communication ou de diffusion, une information signalant le démarrage de la phase de reconfiguration de l'unité de traitement d'informations,
dans lequel la reconfiguration de l'unité de traitement d'informations du terminal (1) concerne un changement de mode de communication d'un premier mode de communication vers un deuxième mode de communication,
dans lequel, suite à l'émission de l'information signalant le démarrage de la phase de reconfiguration de ladite unité de traitement d'informations, recevoir des informations depuis le système de communication ou de diffusion (2,3), certaines au moins desdites informations ayant été traitées, avant transmission, pour tenir compte du démarrage de la phase de reconfiguration de ladite unité de traitement d'informations.

14. Produit programme d'ordinateur comprenant des instructions aptes à mettre en oeuvre l'étape suivante, lorsque ledit programme d'ordinateur est chargé et exécuté par des moyens informatiques d'un système de communication ou de diffusion (2,3) agencé pour transmettre des informations vers au moins un terminal radio
(1) comprenant une unité de traitement d'informations :
- recevoir du terminal une information signalant le démarrage d'une phase de reconfiguration de l'unité de traitement d'informations par un changement de standard de communication ou par un changement de codage/décodage.
dans lequel la reconfiguration de l'unité de traitement d'informations du terminal (1) concerne un changement de mode de communication d'un premier mode de communication vers un deuxième mode de communication,
dans lequel, suite la réception de l'information signalant le démarrage de la phase de reconfiguration de ladite unité de traitement d'informations, transmettre des informations vers le terminal (1), certaines au moins desdites informations étant traitées, avant transmission, pour tenir compte du démarrage de la phase de reconfiguration de ladite unité de traitement d'informations.

## Patentansprüche

1. Verfahren zur Umkonfiguration einer Informationsverarbeitungseinheit eines Endgeräts (1) durch eine Änderung eines Kommunikationsstandards oder durch eine Änderung einer Codierung/Decodierung, wobei das Endgerät dazu vorgesehen ist, Informationen von einem Kommunikations- oder Diffusionssystem (2, 3) zu empfangen, wobei das Verfahren die folgenden Schritte umfasst:
- Starten einer Phase der Umkonfiguration der Informationsverarbeitungseinheit; und
- Senden einer Information vom Endgerät zu dem Kommunikations- oder Diffusionssystem, die den Start der Phase der Umkonfiguration der Informationsverarbeitungseinheit anzeigt,
bei dem die Umkonfiguration der Informationsverarbeitungseinheit des Endgeräts (1) eine Änderung eines Kommunikationsmodus von einem ersten Kommunikationsmodus in einen zweiten Kommunikationsmodus betrifft,
bei dem nach dem Senden der Information, die den Start der Phase der Umkonfiguration der Informationsverarbeitungseinheit anzeigt, das Verfahren ferner einen Empfang von Informationen von dem Kommunikations- oder Diffusionssystem (2, 3) umfasst, wobei mindestens gewisse der Informationen vor der Übertragung bearbeitet wurden, um den Start der Phase der Umkonfiguration der Informationsverarbeitungseinheit zu berücksichtigen.

2. Verfahren zur Umkonfiguration nach Anspruch 1, ferner umfassend das Senden einer Information von dem Endgerät (1) zu dem Kommunikations- oder Diffusionssystem (2, 3), die ein Ereignis nach dem Ende der Phase der Umkonfiguration der Informationsverarbeitungseinheit anzeigt.

3. Verfahren zur Umkonfiguration nach Anspruch 1 oder 2, ferner umfassend die Speicherung der von dem Kommunikations- oder Diffusionssystem (2, 3) während der Phase der Umkonfiguration der Informationsverarbeitungseinheit empfangenen Informationen in einem Pufferspeicher (18-23) des Endgeräts (1).

4. Verfahren zur Umkonfiguration nach den Ansprüchen 2 und 3, bei dem das Ereignis nach dem Ende der Phase der Umkonfiguration der Informationsverarbeitungseinheit den Verlauf einer Belegungsrate des Pufferspeichers (18-23) des Endgeräts (1) unter einer vorbestimmten Grenze umfasst.

5. Verfahren zur Umkonfiguration nach Anspruch 3 oder 4, bei dem eine abgestufte Bearbeitung von der Informationsverarbeitungseinheit nach der Phase der Umkonfiguration der Informationsverarbeitungseinheit eingesetzt wird, um den Pufferspeicher (18-23) des Endgeräts (1) in einem beschleunigten Rhythmus zu leeren.

6. Verfahren zur Kommunikation zwischen einem Funkendgerät (1), umfassend eine Informationsverarbeitungseinheit und ein Kommunikations- oder Diffusionssystem (2, 3), das geeignet ist, Informationen zu dem Endgerät zu übertragen, wobei das Verfahren den folgenden Schritt umfasst, wenn das Kommunikations- oder Diffusionssystem Informationen zu dem Endgerät im Rahmen einer Kommunikation überträgt:
- vom Endgerät Empfang einer Information, die den Start einer Phase der Umkonfiguration der Informationsverarbeitungseinheit des Endgeräts anzeigt,
bei dem die Umkonfiguration der Informationsverarbeitungseinheit des Endgeräts (1) eine Änderung eines Kommunikationsmodus von einem ersten Kommunikationsmodus zu einem zweiten Kommunikationsmodus betrifft,
bei dem nach dem Empfang der Information, die den Start der Phase der Umkonfiguration der Informationsverarbeitungseinheit anzeigt, das Verfahren ferner eine Übertragung von Informationen von dem Kommunikations- oder Diffusionssystem (2, 3) zu dem Endgerät (1) umfasst, wobei mindestens gewisse der Informationen vor der Übertragung bearbeitet wurden, um den Start der Phase der Umkonfiguration der Informationsverarbeitungseinheit zu berücksichtigen.

7. Kommunikationsverfahren nach Anspruch 1, ferner umfassend das Senden einer Information von dem Endgerät (1) zu dem Kommunikations- oder Diffusionssystem (2, 3), die ein Ereignis nach dem Ende der Phase der Umkonfiguration der Informationsverarbeitungseinheit anzeigt.

8. Kommunikationsverfahren nach den Ansprüchen 1 und 7, bei dem die bearbeiteten Informationen vor der Übertragung zur Berücksichtigung einer Phase der Umkonfiguration der Informationsverarbeitungseinheit zumindest gewisse der Informationen umfassen, die von dem Kommunikations- oder Diffusionssystem zu dem Endgerät durch das Kommunikations- oder Diffusionssystem zwischen den Empfangsphasen der Information übertragen werden, die den Start einer Phase der Umkonfiguration der Informationsverarbeitungseinheit anzeigt, und der Information, die ein Ereignis nach dem Ende der Phase der Umkonfiguration der Informationsverarbeitungseinheit anzeigt.

9. Kommunikationsverfahren nach einem der Ansprüche 1, 7 bis 8, bei dem die Bearbeitung, vor Übertragung, mindestens gewisser der Informationen, die von dem Kommunikations- oder Diffusionssystem (2, 3) zu dem Endgerät (1) übertragen werden, um den Start einer Phase der Umkonfiguration der Informationsverarbeitungseinheit zu berücksichtigen, mindestens eine unter folgenden umfasst: Einführung einer Übertragungsverzögerung, ein erhöhter Schutz vor Fehlern und eine stärkere Kompression.

10. Funkendgerät (1), umfassend eine Informationsverarbeitungseinheit, und das dazu vorgesehen ist, Informationen von einem Kommunikations- oder Diffusionssystem (2, 3) zu empfangen, wobei das Endgerät umfasst:
- Mittel zum Starten einer Phase der Umkonfiguration der Informationsverarbeitungseinheit durch eine Änderung des Kommunikationsstandards oder durch eine Änderung der Codierung/Decodierung; und
- Mittel, um das Kommunikations- oder Diffusionssystem vom Start der Phase der Umkonfiguration der Informationsverarbeitungseinheit zu informieren,
bei dem die Umkonfiguration der Informationsverarbeitungseinheit des Endgeräts (1) eine Änderung eines Kommunikationsmodus von einem ersten Kommunikationsmodus in einen zweiten Kommunikationsmodus betrifft,
bei dem nach dem Senden der Information, die den Start der Phase der Umkonfiguration der Informationsverarbeitungseinheit anzeigt, das Endgerät ferner Mittel für den Empfang von Informationen von dem Kommunikations- oder Diffusionssystem (2, 3) umfasst, wobei mindestens gewisse der Informationen vor der Übertragung bearbeitet wurden, um den Start der Phase der Umkonfiguration der Informationsverarbeitungseinheit zu berücksichtigen.

11. Kommunikations- oder Diffusionssystem (2, 3), das dazu vorgesehen ist, Informationen zu mindestens einem Funkendgerät (1) zu übertragen, umfassend eine Informationsverarbeitungseinheit, wobei das Kommunikations- oder Diffusionssystem umfasst:
- Mittel, um von dem Endgerät eine Information zu empfangen, die den Start einer Phase der Umkonfiguration der Informationsverarbeitungseinheit des Endgeräts durch eine Änderung eines Kommunikationsstandards oder durch eine Änderung der Codierung/Decodierung anzeigt,
bei dem die Umkonfiguration der Informationsverarbeitungseinheit des Endgeräts (1) eine Änderung eines Kommunikationsmodus von einem ersten Kommunikationsmodus in einen zweiten Kommunikationsmodus betrifft,
bei dem nach dem Empfang der Information, die den Start der Phase der Umkonfiguration der Informationsverarbeitungseinheit anzeigt, das Kommunikations- oder Diffusionssystem (2, 3) ferner Mittel für die Übertragung von Informationen zu dem Endgerät (1) umfasst, wobei mindestens gewisse der Informationen vor der Übertragung bearbeitet wurden, um den Start der Phase der Umkonfiguration der Informationsverarbeitungseinheit zu berücksichtigen.

12. Kommunikations- oder Diffusionssystem (2, 3) nach Anspruch 11, ferner umfassend Mittel, um vor der Übertragung mindestens gewisse der zu dem Endgerät (1) übertragenen Informationen nach dem Empfang der Information, die den Start der Phase der Umkonfiguration der Verarbeitungseinheit anzeigt, zu bearbeiten, um den Start zu berücksichtigen.

13. Computerprogrammprodukt, umfassend Anweisungen, die geeignet sind, eine Umkonfiguration einer Informationsverarbeitungseinheit eines Funkendgeräts (1), das dazu vorgesehen ist, Informationen von einem Kommunikations- oder Diffusionssystem (2, 3) zu empfangen, nach den folgenden Schritten einzusetzen, wenn das Programm geladen und von Informatikmitteln des Endgeräts ausgeführt wird:
- Starten einer Phase der Umkonfiguration der Informationsverarbeitungseinheit durch eine Änderung eines Kommunikationsstandards oder durch eine Änderung einer Codierung/Decodierung; und
- Senden einer Information vom Endgerät zu dem Kommunikations- oder Diffusionssystem, die den Start der Phase der Umkonfiguration der Informationsverarbeitungseinheit anzeigt,
bei dem die Umkonfiguration der Informationsverarbeitungseinheit des Endgeräts (1) eine Änderung eines Kommunikationsmodus von einem ersten Kommunikationsmodus in einen zweiten Kommunikationsmodus betrifft,
bei dem nach dem Senden der Information, die den Start der Phase der Umkonfiguration der Informationsverarbeitungseinheit anzeigt, ferner Informationen von dem Kommunikations- oder Diffusionssystem (2, 3) empfangen werden, wobei mindestens gewisse der Informationen vor der Übertragung bearbeitet wurden, um den Start der Phase der Umkonfiguration der Informationsverarbeitungseinheit zu berücksichtigen.

14. Computerprogrammprodukt, umfassend Anweisungen, die geeignet sind, den folgenden Schritt einzusetzen, wenn das Computerprogramm geladen und von Informatikmitteln eines Kommunikations- oder Diffusionssystems (2, 3) ausgeführt wird, das dazu vorgesehen ist, Informationen zu mindestens einem Funkendgerät (1) zu übertragen, umfassend eine Informationsverarbeitungseinheit:
- vom Endgerät Empfang einer Information, die den Start einer Phase der Umkonfiguration der Informationsverarbeitungseinheit durch eine Änderung eines Kommunikationsstandards oder durch eine Änderung einer Codierung/Decodierung anzeigt,
bei dem die Umkonfiguration der Informationsverarbeitungseinheit des Endgeräts (1) eine Änderung eines Kommunikationsmodus von einem ersten Kommunikationsmodus zu einem zweiten Kommunikationsmodus betrifft,
bei dem nach dem Empfang der Information, die den Start der Phase der Umkonfiguration der Informationsverarbeitungseinheit anzeigt, ferner Informationen zu dem Endgerät (1) übertragen werden, wobei mindestens gewisse der Informationen vor der Übertragung bearbeitet wurden, um den Start der Phase der Umkonfiguration der Informationsverarbeitungseinheit zu berücksichtigen.

## Claims

1. Method of reconfiguration of an information processing unit of a radio terminal (1) by a change of communication standard or by a change of coding/decoding, said terminal being designed to receive information from a communication or broadcasting system (2,3), the method comprising the following steps:
- booting a phase of reconfiguration of the information processing unit; and
- sending, from the terminal to the communication or broadcasting system, an item of information signalling the booting of the phase of reconfiguration of the information processing unit,
in which the reconfiguration of the information processing unit of the terminal (1) relates to a change of communication mode from a first communication mode to a second communication mode,
in which, following the sending of the item of information signalling the booting of the phase of reconfiguration of said information processing unit, the method furthermore comprises a reception of information from the communication or broadcasting system (2,3), some at least of said information being processed, before transmission, to take account of the booting of the phase of reconfiguration of said information processing unit.

2. Method of reconfiguration according to Claim 1, furthermore comprising the sending, from the terminal (1) to the communication or broadcasting system (2,3), of an item of information signalling an event subsequent to the end of the phase of reconfiguration of the information processing unit.

3. Method of reconfiguration according to Claim 1 or 2, furthermore comprising the storage, in a buffer memory (18-23) of the terminal (1), of the information received from the communication or broadcasting system (2,3), in the course of the phase of reconfiguration of the information processing unit.

4. Method of reconfiguration according to Claims 2 and 3, in which the event subsequent to the end of the phase of reconfiguration of the information processing unit comprises the passing below a predetermined threshold of an occupancy rate of the buffer memory (18-23) of the terminal (1).

5. Method of reconfiguration according to Claim 3 or 4, in which a degraded processing is implemented by the information processing unit after the phase of reconfiguration of said information processing unit, so as to empty the buffer memory (18-23) of the terminal (1) at an accelerated tempo.

6. Method of communication between a radio terminal (1) comprising an information processing unit and a communication or broadcasting system (2,3) able to transmit information to said terminal, the method comprising the following step, when the communication or broadcasting system transmits information to said terminal within the framework of a communication:
- receiving, from the terminal, an item of information signalling the booting of a phase of reconfiguration of the information processing unit of the terminal;
in which the reconfiguration of the information processing unit of the terminal (1) relates to a change of communication mode from a first communication mode to a second communication mode,
in which, following the reception of the item of information signalling the booting of the phase of reconfiguration of said information processing unit, the method furthermore comprises a transmission of information from the communication or broadcasting system (2,3) to the terminal (1), some at least of said information being processed, before transmission, to take account of the booting of the phase of reconfiguration of said information processing unit.

7. Method of communication according to Claim 1, furthermore comprising the sending, from the terminal (1) to the communication or broadcasting system (2,3), of an item of information signalling an event subsequent to the end of the phase of reconfiguration of the information processing unit.

8. Method of communication according to Claims 1 and 7, in which the information processed, before transmission, to take account of the booting of a phase of reconfiguration of said information processing unit, comprises some at least of the information transmitted from the communication or broadcasting system to the terminal between the receptions, by the communication or broadcasting system, of the item of information signalling the booting of a phase of reconfiguration of the information processing unit and of the item of information signalling an event subsequent to the end of the phase of reconfiguration of the information processing unit.

9. Method of communication according to any one of Claims 1, 7 to 8, in which the processing, before transmission, of some at least of the information transmitted from the communication or broadcasting system (2,3) to the terminal (1), to take account of the booting of a phase of reconfiguration of said information processing unit, comprises one at least from among: the introduction of a transmission delay, increased protection against errors and increased compression.

10. Radio terminal (1) comprising an information processing unit and designed to receive information from a communication or broadcasting system (2,3), the terminal comprising:
- means for booting a phase of reconfiguration of the information processing unit by a change of communication standard or by a change of coding/decoding; and
- means for informing the communication or broadcasting system of the booting of the phase of reconfiguration of the information processing unit,
in which the reconfiguration of the information processing unit of the terminal (1) relates to a change of communication mode from a first communication mode to a second communication mode,
in which, the terminal furthermore comprises means for, following the sending of the item of information signalling the booting of the phase of reconfiguration of said information processing unit, receiving information from the communication or broadcasting system (2,3), some at least of said information having been processed, before transmission, to take account of the booting of the phase of reconfiguration of said information processing unit.

11. Communication or broadcasting system (2,3) designed to transmit information to at least one radio terminal (1) comprising an information processing unit, the communication or broadcasting system comprising:
- means for receiving from the terminal an item of information signalling the booting of a phase of reconfiguration of the information processing unit of the terminal by a change of communication standard or by a change of coding/decoding,
in which the reconfiguration of the information processing unit of the terminal (1) relates to a change of communication mode from a first communication mode to a second communication mode,
in which, the communication or broadcasting system (2,3) furthermore comprises means for, following the reception of the item of information signalling the booting of the phase of reconfiguration of said information processing unit, transmitting information to the terminal (1), some at least of said information being processed, before transmission, to take account of the booting of the phase of reconfiguration of said information processing unit.

12. Communication or broadcasting system (2,3) according to Claim 11, furthermore comprising means for processing, before transmission, some at least of the information transmitted to the terminal (1), following the reception of the item of information signalling the booting of the phase of reconfiguration of said processing unit, to take account of said booting.

13. Computer program product comprising instructions able to implement a reconfiguration of an information processing unit of a radio terminal (1) designed to receive information from a communication or broadcasting system (2,3), according to the following steps, when said program is loaded and executed by computing means of the terminal:
- booting a phase of reconfiguration of the information processing unit by a change of communication standard or by a change of coding/decoding; and
- sending, from the terminal to the communication or broadcasting system, an item of information signalling the booting of the phase of reconfiguration of the information processing unit,
in which the reconfiguration of the information processing unit of the terminal (1) relates to a change of communication mode from a first communication mode to a second communication mode,
in which, following the sending of the item of information signalling the booting of the phase of reconfiguration of said information processing unit, receiving information from the communication or broadcasting system (2,3), some at least of said information having been processed, before transmission, to take account of the booting of the phase of reconfiguration of said information processing unit.

14. Computer program product comprising instructions able to implement the following step, when said computer program is loaded and executed by computing means of a communication or broadcasting system (2,3) designed to transmit information to at least one radio terminal (1) comprising an information processing unit:
- receiving from the terminal an item of information signalling the booting of a phase of reconfiguration of the information processing unit by a change of communication standard or by a change of coding/decoding,
in which the reconfiguration of the information processing unit of the terminal (1) relates to a change of communication mode from a first communication mode to a second communication mode,
in which, following the reception of the item of information signalling the booting of the phase of reconfiguration of said information processing unit, transmitting information to the terminal (1), some at least of said information being processed, before transmission, to take account of the booting of the phase of reconfiguration of said information processing unit.
